## Europäisches Patentamt

## European Patent Office

## Office européen des brevets

(19)

(11) Veröffentlichungsnummer: **0 112 934**
**B1**

(12) # EUROPÄISCHE PATENTSCHRIFT

(45) Veröffentlichungstag der Patentschrift:
**24.06.87**

(21) Anmeldenummer: **82112108.4**

(22) Anmeldetag: **30.12.82**

(51) Int. Cl.⁴: **B 29 C 41/04,** B 29 C 41/08,
B 29 C 41/18, B 29 C 41/20,
B 29 C 67/14

(54) Vorrichtung zum Herstellen von konischen Hohlmasten aus faserarmiertem Kunstharz.

(43) Veröffentlichungstag der Anmeldung:
**11.07.84 Patentblatt 84/28**

(45) Bekanntmachung des Hinweises auf die Patenterteilung:
**24.06.87 Patentblatt 87/26**

(84) Benannte Vertragsstaaten:
**BE DE FR GB IT NL**

(56) Entgegenhaltungen:
**EP - A - 0 045 820**
**DE - A - 2 000 694**
**DE - A - 2 313 122**
**FR - A - 1 347 394**
**GB - A - 767 209**
**GB - A - 842 111**
**US - A - 2 859 151**
**US - A - 3 237 247**
**US - A - 4 002 714**

(73) Patentinhaber: **G.A. Pfleiderer GmbH & Co KG,
D-8430 Neumarkt (DE)**

(72) Erfinder: **Rother, Bruno, Dr.-Eberle-Strasse 38,
D-8430 Neumarkt/Opf (DE)**
Erfinder: **Trommen, Hartmut, Württemberger Strasse 12,
D-8431 Postbauer-Heng (DE)**

(74) Vertreter: **Patentanwälte Czowalla . Matschkur +
Partner,
Dr.-Kurt-Schumacher-Strasse 23 Postfach 9109,
D-8500 Nürnberg 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung richtet sich auf eine Vorrichtung zum Herstellen von konischen Hohlmasten mit im wesentlichen kreisförmigen Querschnitt aus faserarmiertem Kunstharz, bei der die Faserarmierung von einem in die Form eingeführten Tragrohr abgewickelt wird, sich der Forminnenwand anlegt und von dem Kunstharz durchtränkt wird, welches durch eine annähernd gerade in Längsrichtung der Form geführte Düse in die Form injiziert wird.

Maste aus faserverstärktem Kunstharz werden bevorzugt in Schleudertechnik hergestellt, d.h. eine Armierung aus Glasfaser oder mineralischen oder textilen Fasern wird zunächst in eine konische Form eingebracht. Diese Form wird auf Tragrollen einer Schleudermaschine aufgelegt und in Rotation versetzt. Während der Drehbewegung wird Kunstharz in die Form eingegeben, das die Armierung völlig durchtränkt und infolge der Zentrifugalkraft nach aussen dringt und sich an die Forminnenwände anlegt. Maste dieses Systems haben sich gut bewährt. Sie lassen sich in verschiedenen Farben über den ganzen Querschnitt durchgefärbt herstellen und sind besonders kratzbeständig. Sie sind nicht korrosionsanfällig und bedürfen keinerlei Pflege. Das Material ist selbstisolierend, so dass elektrische Unfälle nicht auftreten können. Bei Verkehrsunfällen durch aufprallende Fahrzeuge sind die Personen- und Sachschäden erfahrungsgemäss wesentlich geringer als bei Masten aus Stahl oder Beton.

Ein grosser Vorteil der Schleudertechnik ist, dass man die Armierung an beliebigen Stellen – etwa durch Einbringen einer oder mehrerer zusätzlicher Lagen Glasfaser – beliebig verstärken kann. Beispielsweise kann dort, wo nachträglich eine Wartungstür eingeschnitten oder wo zusätzlich Leuchten, Lautsprecher oder dergleichen angebracht werden sollen, eine solche Zusatzarmierung vorgesehen werden.

Es hat sich bislang als schwierig herausgestellt, Maste, die mit zusätzlichen Faserarmierungen versehen werden sollen, so mit Kunstharz zu tränken, dass an allen Stellen des Mastes die gewünschten Wanddicken entstehen und die Fasern auch richtig und vollkommen mit Kunstharz durchtränkt sind. Bekannt ist ein Füllverfahren, bei dem vom Mastzopf aus das Kunstharz drucklos in die Form einläuft und infolge der Konizität der Form zum grösseren Durchmesser hin abwandert. Bei einem anderen System wird eine Füllrinne in Längsrichtung in die Form eingeführt, aus der das Kunstharz dann während des Rotationsprozesses einläuft. Der Nachteil dieser Fülltechnologie liegt darin, dass die verschieden dikken Armierungen durch die Faser nicht in der gewünschten zuverlässigen Weise zu tränken sind.

Man hat daher versucht, das Kunstharz mit einer Füllanze, die in Längsrichtung in die Form eingeführt wird, einzugeben. Mit einer solchen Lanze kann man durch variable, gesteuerte Füllmenge zwar dafür sorgen, dass die Glasmatten entsprechend ihrer unterschiedlichen Dicke einwandfrei getränkt werden; der Nachteil einer solchen Füllanze ist aber, dass sie für geringe Formendurchmesser und grosse Längen nicht geeignet ist.

Bekannt ist auch eine Methode, bei der die ganze Schleudermaschine mit der Form schräggestellt wird, so dass das Kunstharz sich der Neigung der Form entsprechend in deren Längsrichtung verteilen kann. Dieses Verfahren hat den Nachteil, dass bei hohen Drehzahlen, wie sie bei der modernen Schleudertechnik angewendet werden, trotz der Schrägstellung das Harz zum Fussende des Mastes abwandert, wo eine starke Harzanreicherung stattfindet. Dies führt dazu, dass am Fussende unerwünschte Harzmengen und grössere Wanddicken auftreten, die beim Schrumpfen Risse bilden und dadurch die Festigkeit des Erzeugnisses vermindern.

Bei der Vorrichtung nach EP-B 0 045 820 wird ein Schleuderverfahren zum Herstellen eines rohrförmigen Mastes aus Kunstharz mit einer Faserarmierung angewandt bei der eine gleichmässige Wandstärke und -armierung angestrebt und hierzu das Kunstharz durch eine Düse von einem Ende der Form unter hohem Druck injiziert wird. Von dieser Vorrichtung Verfahren geht auch die vorliegende Erfindung aus. Das Ziel richtet sich jedoch auf die Herstellung eines Mastes, bei dem verschieden dicke, nach statischen oder dynamischen Bedürfnissen ausgelegte Faserarmierungen einwandfrei mit Kunstharz durchtränkt sind und bei dem durch entsprechende Massnahmen die Gefahr einer Rissbildung am Fussende ausgeschlossen ist.

Erfindungsgemäss wird diese Aufgabe durch eine Vorrichtung der eingangs bezeichneten Art gelöst, bei der die Faserarmierung an besonders verstärkungsbedürftigen Stellen eine Einlage aus zusätzlichen kleinen Fasermatten aufweist, bei der weiter am Fussende der Form ein Ringflansch angeordnet ist, dessen Innendurchmesser dem Innendurchmesser des Mastfusses entspricht und bei der schliesslich an dem der Injektionsdüse gegenüberliegenden Formende eine das Forminnere ausleuchtende Lichtquelle angeordnet ist.

Die Armierung wird bei diesem Verfahren in an sich bekannter Weise mit einem Tragrohr in die Form eingebracht. Auf das Tragrohr werden ein oder mehrere Fasermatten aufgewickelt. Um eine hohe Biegesteifigkeit zu erreichen, ist die Richtung der Fasern zweckmässig in Längsrichtung orientiert. An den Bereichen der gewünschten Verstärkungen werden ein oder mehrere zusätzliche Lagen Fasermatte mit eingerollt. Das Tragrohr mit der aufgewickelten Faserarmierung wird in die Form eingebracht. Nach kurzer Rotation der Form wickelt sich die Faserarmierung vom Tragrohr ab und legt sich an die Innenwand der Form an. Danach erfolgt die Injektion des Kunstharzes durch Einspritzen vom Fuss- oder Zopfende des Mastes aus mit einem freien, fast gerade gerichteten Strahl in Längsrichtung der Form.

Durch Veränderung des Einspritzwinkels an der Düse lässt sich die vorgegebene Kunstharzmenge exakt auf die Faserarmierung injizieren, und zwar in der Weise, dass die Glasfaserlagen entsprechend ihrer unterschiedlichen Dicke richtig und in der gewünschten Weise durchtränkt sind. Der Injiziervorgang lässt sich durch die Beleuchtungsquelle auf der Gegenseite der Form sehr genau kontrollieren, so dass einerseits unerwünschte Harzanreicherungen oder andererseits unzureichend getränke Bereiche der Armierungsmatten ausgeschlossen sind.

Durch die Konizität der Form hat bei der Rotation das Harz die Tendenz, zum grossen Durchmesser abzuwandern. Durch den Ringflansch, der dem Formende vorgeschraubt ist, wird verhindert, dass Kunstharz in unerwünschter Weise abfliessen kann. Der Innendurchmesser des Flansches ist dabei so gestaltet, dass er dem vorgegebenen Innendurchmesser des Mastes entspricht. Etwa noch zusätzlich abtreibendes Harz kann sich dadurch nicht stauen und bei der Polymerisation Risse bilden.

Es hat sich in weiterer Ausgestaltung der Erfindung als besonders vorteilhaft erwiesen, die Anordnung so zu treffen, dass das den Ringflansch tragende Formende von einer Haube zum Auffangen von überschüssigem Kunstharz umschlossen ist. Diese Auffanghaube hat nach einem anderen Merkmal eine seitliche untere Ablauföffnung zum Abführen des aus der Form austretenden überschüssigen Kunstharzes. Durch entsprechende Einrichtungen kann dafür gesorgt werden, dass das Harz dem Produktionsprozess erneut zugeführt wird.

In weiterer Ausgestaltung der Erfindung weist die Auffanghaube eine etwas zentrische Öffnung zum Anschluss eines in das Forminnere gerichteten Heizgebläses auf.

Nach der Injektion wird die Polymerisation der Maste durch Zuführung von Wärme eingeleitet. Dabei wird von aussen Strahlungswärme, etwa durch keramische Heizkörper, aufgebracht. Die Form kann bereits vor dem Injektionsvorgang durch diese Aussenheizung vorgewärmt sein. Zusätzlich wird das Innere des rotierenden Mastes beheizt. Dies geschieht durch ein Heizgebläse, das Warmluft in axialer Richtung in das Mastinnere einbläst. Durch diese doppelte Heizung von aussen und innen wird eine sehr kurze Zykluszeit erreicht, ohne dass zusätzliche Härteeinrichtungen benötigt werden. Ausserdem begünstigt diese Heiztechnik die bei der Polymerisation auftretende Schrumpfung des konischen Mastes, der dann leicht in Längsrichtung aus der Form ausgestossen werden kann.

Schliesslich sieht die Erfindung vor, dass an dem einen Formende eine an einen Exhaustor angeschlossene, die Formöffnung umschliessende Absaughaube angeordnet ist. Zweckmässig ist diese Absaughaube an dem den kleineren Durchmesser aufweisenden Formende angebracht. Durch den Absaugventilator werden die bei der Polymerisation auftretenden schädlichen Dämpfe zuverlässig abgeführt.

Weitere Einzelheiten und Vorteile der Erfindung ergeben sich aus der folgenden Beschreibung einiger bevorzugter Ausführungsformen der Erfindung sowie anhand der Zeichnung. Hierbei zeigen, weitgehend schematisiert:

Fig. 1 eine Aufsicht auf eine vorbereitete Faserarmierung mit vorwiegend längsorientierten Glasfasern und auf diese aufgelegten Verstärkungsmatten, sowie dem Tragrohr;

Fig. 2 eine Längsansicht einer auf das Tragrohr aufgewickelten Faserarmierung mit den entsprechenden Verstärkungsmatten;

Fig. 3 einen Längsschnitt durch eine Schleuderform, mit der vom Tragrohr abgewickelten Faserarmierung unmittelbar bevor das Tragrohr in axialer Richtung aus der Form entfernt wird;

Fig. 4 einen Längsschnitt durch die Schleuderform, noch ohne Ringflansch, mit eingebrachter Faserarmierung und mit der Injektionseinrichtung sowie mit auf der Gegenseite angebrachter Lichtquelle;

Fig. 5 einen Längsschnitt durch das Fussende der Form mit aufgeschraubtem Ringflansch und Auffanghaube;

Fig. 6 einen Querschnitt nach Linie VI–VI – in Fig. 5 durch die Auffanghaube mit Ansicht auf die Stirnseite der Form;

Fig. 7 eine Stirnansicht einer Schleudermaschine mit aufgelegter Form und mit seitlich angebrachter äusserer Strahlungsheizung und

Fig. 8 einen Längsschnitt durch die Schleuderform mit Haube und Heissluftgebläse am grossen Durchmesser und Absaughaube am kleineren Durchmesser der Form.

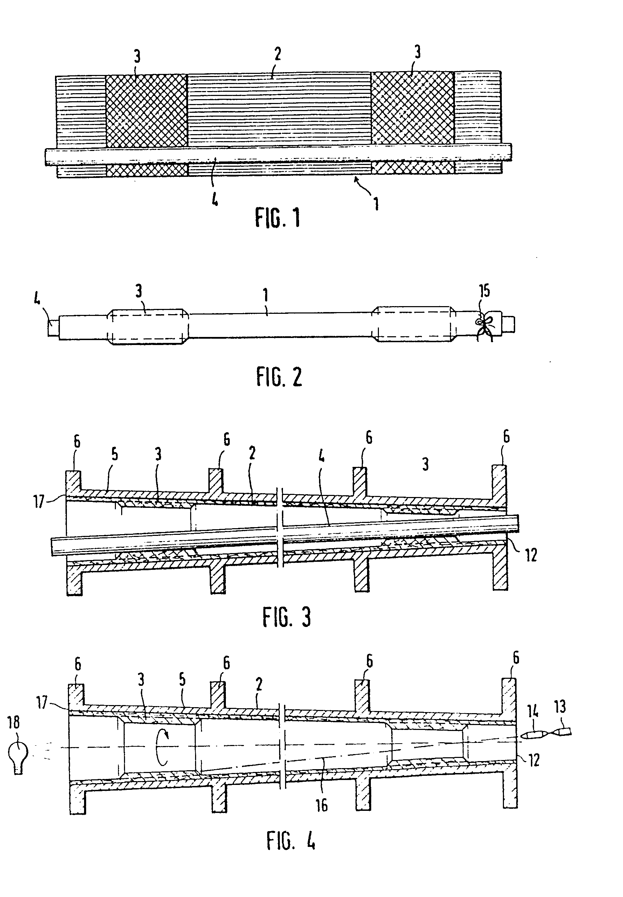

Die Faserarmierung 1 besteht beispielsweise aus einer oder mehreren vorgewebten Matten 2 mit vorwiegend in Längsrichtung des herzustellenden Mastes orientierten Glasfasern. An den Stellen, an denen aus statischen oder dynamischen Gründen eine Verstärkung der Armierung 1 erforderlich ist, werden zusätzliche kleinere Fasermatten 3 aufgelegt. Diese Matten 3 können je nach den Bedürfnissen längs- oder quergerichtet oder auch wirr armiert sein. Auf die Matten 2 und 3 wird das Tragrohr 4 aufgelegt. Die Matten 2, 3 werden auf das Tragrohr 4 zu einer Längsrolle aufgewickelt und mit einem Band 15 od. dgl. Befestigungsmitteln fixiert (s. Fig. 2). Das gesamte Armierungspaket wird mit dem Tragrohr 4 in die konische Form 5 in Längsrichtung eingeführt. Die Form 5 ist über die Laufringe 6 auf am Rahmen 7 der Schleudermaschine 8 angeordneten Rollen 9 u. 10 gelagert, von denen die Rollen 10 von der Antriebsmaschine 11 in Rotation versetzt werden. Wird die Form 5 kurzzeitig in einer Drehrichtung in Rotation versetzt, die der Aufwicklung der Matten 2 auf das Tragrohr 4 entgegengerichtet ist, wickeln sich die Matten 2 und ggf. 3 von dem Tragrohr 4 ab und legen sich an die Innenwand der Form 5 an (vgl. Fig. 3). Hierbei behalten die Verstärkungsmatten 3 die vorgegebene Lage gegenüber den eigentlichen Armierungsmatten 2 bei. Anschliessend wird das Tragrohr 4 dann in Längsrichtung aus der Form 5 herausgezogen.

An dem den kleineren Durchmesser aufweisenden Ende 12 der Form 5 ist eine an die Zuführungsleitung 13 angeschlossene Düse 14 angeordnet, die der Injektion des Kunstharzes in das Innere der Form 5 dient. Aus der Düse 14 wird das Kunstharz in scharfem, freien, fast geraden Strahl 16 in die Form 5 eingespritzt. Die Düse 14 kann natürlich auch am Fussende 17 der Form 5 angeordnet sein. Bei diesem Injektionsvorgang befindet sich die Form 5 in Rotation. Auf der der Injektionsdüse 14 entgegengesetzten Stirnseite der Form 5 ist eine Lichtquelle 18 angeordnet, die das Innere der Form 5 ausleuchtet und in deren Licht sich der Injektionsvorgang und das Durchtränken der Faserarmierung exakt beobachten lässt. Dadurch kann eine vollständige und zuverlässige Tränkung der Faserarmierung mit dem Kunstharz gewährleistet sein.

An der Stirnseite 17 der Form 5 ist ein Ringflansch 19 mittels Schrauben 20 befestigt, dessen Innendurchmesser 21 den gewünschten Innendurchmesser des zu fertigenden Mastes 22 entspricht. Tritt infolge der Konizität der Form 5 ein unerwünscht hoher Harzanteil am Fussende 17 aus, so fliesst dieser durch die Öffnung 23 des Ringflansches 19 ab und wird infolge der Zentrifugalkraft nach aussen geschleudert. Dieser durch Pfeile 24 angedeutete Strom des Harzüberschusses wird in der Auffanghaube 25 aufgefangen und über eine seitliche Öffnung 26 abgeleitet.

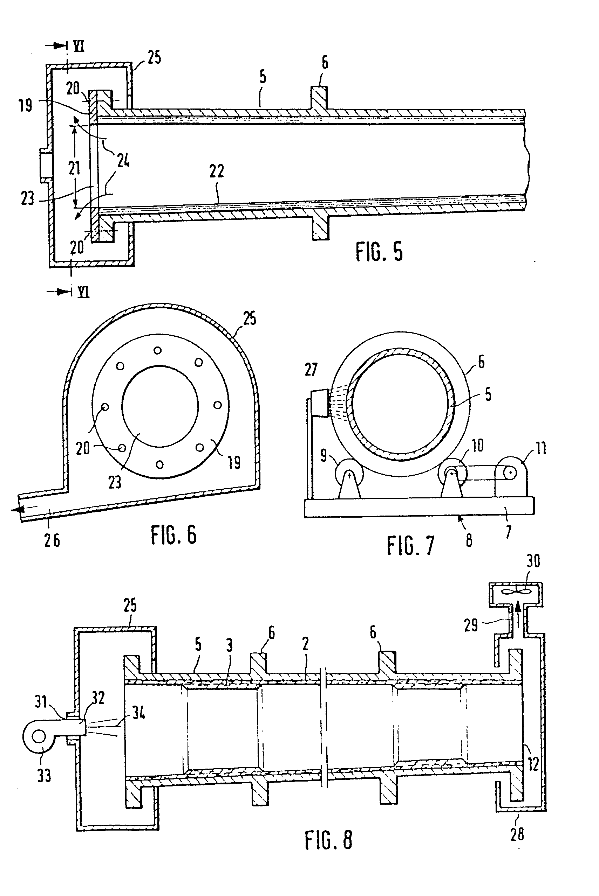

An den Rahmen 7 der Schleudermaschine 8 sind seitlich Strahlungsheizkörper 27 angeordnet, mit denen der Aussenmantel der Form 5 erwärmt werden kann. Die Formöffnung 12 ist, wie Fig. 8 erkennen lässt, nachdem die Injektionsdüse 14 entfernt worden ist, mit einer Absaughaube 28 versehen, die das Formende umschliesst und einen Anschlussstutzen 29 zum Anschluss an einen Exhaustor 30 aufweist. Die gegenüber angeordnete Auffanghaube 25 ist mit einer etwa zentrischen Öffnung 31 versehen, durch die die Düse 32 eines Heizgebläses 33 sich erstreckt. Auf diese Weise wird Heissluft 34 in das Innere der Form 5 in Axialrichtung eingeblasen und durch den Druck des Gebläses 33 und andererseits den durch den Exhaustor 30 in der Absaughaube 28 erzeugten Unterdruck durch die Form 5 in Längsrichtung hindurchgeführt. Von der Heissluft 34 werden die sich bei der Polymerisation des Kunstharzes ergebenen schädlichen Dämpfe mitgerissen und durch die Absaughaube 28 nach aussen abgeführt.

## Patentansprüche

1. Vorrichtung zum Herstellen von konischen Hohlmasten mit im wesentlichen kreisförmigem Querschnitt aus faserarmiertem Kunstharz, bei der die Faserarmierung (1) von einem in eine Form (5) eingeführten Tragrohr abgewickelt wird, sich der Forminnenwand anlegt und von dem Kunstharz durchtränkt wird, welches durch eine annähernd gerade in Längsrichtung der Form (5) geführte Düse (14) in die Form (5) injiziert wird, dadurch gekennzeichnet, dass die Faserarmierung (1) an besonders verstärkungsbedürftigen Stellen eine Einlage aus zusätzlichen kleinen Fasermatten (3) aufweist, dass am Fussende (17) der Form (5) ein Ringflansch (19) angeordnet ist, dessen Innendurchmesser (21) dem Innendurchmesser des Mastfusses entspricht, und dass an dem der Injektionsdüse (14) gegenüberliegenden Formende eine das Forminnere ausleuchtende Lichtquelle (18) angeordnet ist.

2. Vorrichtung nach Anspruch 1, dadurch gekennzeichnet, dass das den Ringflansch (19) tragende Formende von einer Haube (25) zum Auffangen von überschüssigem Kunstharz umschlossen ist.

3. Vorrichtung nach Anspruch 2, dadurch gekennzeichnet, dass die Auffanghaube (25) eine seitliche untere Ablauföffnung (26) aufweist.

4. Vorrichtung nach Ansprüchen 2 oder 3, dadurch gekennzeichnet, dass die Auffanghaube (25) eine etwa zentrische Öffnung (31) zum Anschluss eines in das Forminnere gerichteten Heizgebläses (33) aufweist.

5. Vorrichtung nach Anspruch 1 bis 4, dadurch gekennzeichnet, dass am einen Formende eine an einen Exhaustor (30) angeschlossene, die Formöffnung umschliessende Absaughaube (28) angeordnet ist.

## Claims

1. An apparatus for the production of tapered hollow poles with a substantially circular cross-section, from fibre-reinforced synthetic resin, wherein the fibre reinforcement (1) is unwound from a supporting tube introduced into a mould (5), comes to bear against the inner wall of the mould and is impregnated by the synthetic resin which is injected into the mould (5) through an approximately straight nozzle (14) guided in the longitudinal direction of the mould (5), characterised in that the fibre reinforcement (1) comprises an insert of additional small fibre mats (3) at places which need special strengthening, that disposed at the foot end (17) of the mould (5) is an annular flange (19), the internal diameter (21) of which corresponds to the internal diameter of the foot of the pole, and that a light source (18) which illuminates the interior of the mould is disposed at the end of the mould opposite to the injection nozzle (14).

2. An apparatus as claimed in Claim 1, characterised in that the end of the mould carrying the annular flange (19) is enclosed in a hood (25) to collect excess synthetic resin.

3. An apparatus as claimed in Claim 2, characterised in that the collecting hood (25) comprises a lower lateral outlet (26).

4. An apparatus as claimed in Claim 2 or 3, characterised in that the collecting hood (25) comprises a substantially central opening (31) for the connection of a heater fan (33) directed into the interior of the mould.

5. An apparatus as claimed in Claims 1 to 4, characterised in that a suction hood (28), connected to an extract fan (30) and surrounding the mouth of the mould, is disposed at one end of the mould.

## Revendications

1. Dispositif pour fabriquer des poteaux coniques creux possédant une section transversale essentiellement circulaire, en matière plastique renforcée par des fibres, et dans lequel l'armature (1) formée de fibres est déroulée d'un tube de support introduit dans un moule (5), est appliqué sur la paroi intérieure du moule et est imprégnée par la matière plastique, qui est injectée dans le moule (5) par l'intermédiaire d'une buse (14) guidée selon une trajectoire approximativement rectiligne dans la direction longitudinale du moule (5), caractérisé en ce que l'armature (1) formée de fibres comporte, en des emplacements nécessitant particulièrement d'être renforcés, un insert formé d'un petit matelas supplémentaire de fibres (3), en ce que sur l'extrémité côté pied (17) du moule (5) se trouve disposée une bride annulaire (19), dont le diamètre intérieur (21) correspond au diamètre intérieur de la base du poteau, et en ce qu'une source de lumière (18), qui éclaire l'intérieur du moule, est disposée sur l'extrémité du moule située à l'opposé de la buse d'injection (14).

2. Dispositif selon la revendication 1, caractérisé en ce que l'extrémité du moule portant la bride annulaire (19) est entourée par un capot (25) servant à collecter la matière plastique en excès.

3. Dispositif selon la revendication 2, caractérisé en ce que le capot de collecte (25) comporte une ouverture latérale inférieure d'évacuation (26).

4. Dispositif selon les revendications 2 ou 3, caractérisé en ce que le capot de collecte (25) comporte une ouverture approximativement centrée (31) prévue pour le raccordement d'une soufflante de chauffage (33) dirigée vers l'intérieur du moule.

5. Dispositif selon l'une quelconque des revendications 1 à 4, caractérisé en ce qu'un capot d'aspiration (28), qui est raccordé à un ventilateur aspirant (30) et entoure l'ouverture du moule, est disposé sur une extrémité du moule.

FIG. 1

FIG. 2

FIG. 3

FIG. 4

FIG. 5

FIG. 6

FIG. 7

FIG. 8